# EUROPEAN PATENT APPLICATION

(11) **EP 1 551 009 A1**
(43) Date of publication of application: **06.07.2005**
(21) Application number: 03748563.8
(22) Date of filing: 24.09.2003
(51) Int. Cl.: G11B 7/0045, G11B 7/24, G11B 7/30, G11B 20/10

(54) **OPTICAL RECORDING MEDIUM AND OPTICAL RECORDING MEDIUM RECORDING DEVICE**

(30) Priority: 24.09.2002 JP 2002277257
(71) Applicant: MATSUSHITA ELECTRIC INDUSTRIAL CO., LTD., Kadoma-shi, Osaka 571-8501 (JP)
(72) Inventor: HINO, Yasumori, Ikoma-shi, Nara 630-0112 (JP); AKIYAMA, Tetsuya, Hirakata-shi, Osaka 573-0084 (JP); YAMADA, Noboru, Hirakata-shi, Osaka 573-1104 (JP); MORIYA, Mitsurou, Ikoma-shi, Nara 630-0141 (JP)
(74) Representative: Eisenführ, Speiser & Partner
(86) International application number: PCT/JP2003/012133
(87) International publication number: WO 2004/029943

(57) **Abstract**

An optical recording medium such as DVD has a data recording area (103) in which data can be rewritten and a write-once area (104) in which data can be written only once and not be erased. A medium specific ID (105) which is specific to an optical recording medium is recorded in the write-once area (104). In the data recording area (103), a reflectance ratio of a part where the data is recorded is different from a reflectance ratio in a part where the data is not recorded. A reflectance ratio of a recording pit formed in the write-once area (104) is higher than the higher one of the reflectance ratios in the part where the data is recorded and in the part where the data is not recorded in the data recording area (103). Data recoding in the write-once area (104) is performed by irradiating to the write-once area (104) a laser beam with heat amount of three to 25 times heat amount necessary for recording rewritable data in the data recording area (103).

## Description

### Technical Field

The present invention relates to an optical recording medium such as an optical disk for optically recording information and an apparatus for recording and reproducing the information to and from the recording medium.

### Background Art

In recent years, an optical disk is very actively applied to an AV (audio visual) appliance and a PC (personal computer). For example, a CD (Compact Disc) developed for music develops into a read-only CD-ROM for providing a program for the PC and an application, and further a CD-R capable of writing data once and a CD-RW capable of rewriting data are developed. These formats become a basic optical disk format that has been widely distributed in fields in AV or fields in PC. In addition, depending on development of a high density technology in recent years, a read-only type DVD (Digital Versatile Disc) format capable of storing an video data such as a movie has been rapidly distributed. In DVD, several types of format have been developed for write once and rewritable disk, such as a DVD-R, DVD-RAM and DVD-RW and the distribution of DVD has been accelerated. Due to development of the high density technology in future, it is expected that an optical disk format of a higher capacity and a smaller optical disk format of the same capacity are developed and they appear as an optical disk system to explore a new AV application.

In this field of art, in view of a copyright protection, importance of a technology to prevent the illegal copy of the data is growing. As a system to protect the copyright, a method for recording the specific information for each disk on manufacturing and encrypting data to be recorded on the recording medium by using this specific information is used in many record type of a recording medium, and this method has been spread as a general method. As such a technology, a data recording apparatus for encrypting the data on the basis of a medium specific ID (identifier) that cannot be rewritten by a user and recording it is disclosed in Reference 1.

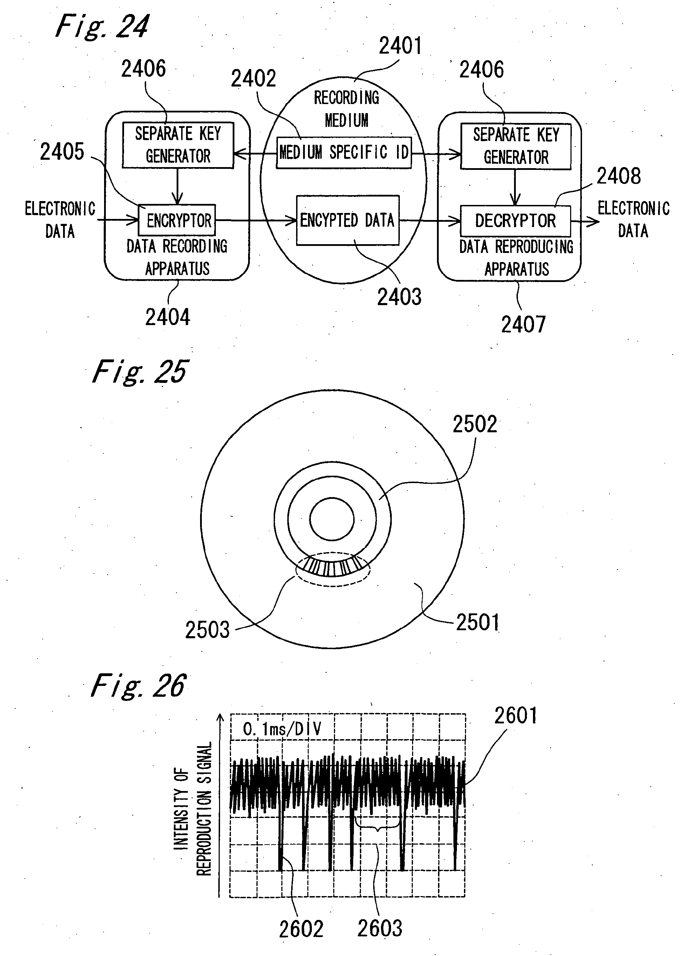

Hereinafter, this conventional art will be simply described with reference to FIG. 24. A data recording apparatus 2404 is configured by an encryptor 2405 and a separate key generator 2406, and a data reproducing apparatus 2407 is configured by a decryptor 2408 and the separate key generator 2406.

The data recording apparatus 2404 reads a medium specific ID 2402, generates an encryption key specific to a recording medium 2401 from the medium specific ID 2402 by the generator 2406. The electronic data is encrypted by the encryptor 2405 with the encryption key, and then recorded in the recording medium 2401 as the encrypted electronic data 2403. The data reproducing apparatus 2407 generates the encryption key specific to the recording medium 2401 from the medium specific ID 2402 in the same manner as the recording process, and using this key, the electronic data is decrypted by the decryptor 2408 to reproduce the decrypted data.

According to such a system, the encoded electronic data 2403 is information specific to the recording medium 2401. Even if the encoded electronic data 2403 is copied in other recording media, unless the medium specific ID 2402 is not copied, the key for decoding the encoded electronic data 2403 cannot be acquired, thus resulting in that the copied recording media cannot reproduce the data correctly so as to protect the copyright from the illegal copy.

This technology of preventing the illegal copy disclosed in the Reference 1 is realized by the medium specific ID 2402 which is information to be specified uniquely and can not be rewritten or copied by users. If the medium specific ID 2402 is copied by any means, the illegal copy can be realized.

A technology to prevent copy and falsification of the medium specific ID 2402 is very important. As a technology to record the medium specific ID, a technology to record a bar code type mark in a part of the disk has been generally used and this technology is disclosed in Reference 2 and Reference 3.

Hereinafter, a technology to record the medium specific ID disclosed in Reference 2 will be simply described with reference to FIG. 25.

In FIG. 25, an optical disk 2501 is configured by pasting two disks of thickness 0.6 mm each other. In the inner periphery of this optical disk 2501, a BCA area 2502 for forming a bar code type mark 2503 is provided. In Reference 2, the BCA area 2502 is configured by concavo-convex pits on which an aluminum reflection film is formed. The bar code type mark 2503 is formed by a laser trimming to melt and remove the reflection film using a YaG laser with high power for this BCA area 2502. The medium specific ID 2402 is recorded with the bar code type mark 2503.

FIG. 26 shows a reproduction signal when the bar code type mark 2503 formed as described above is reproduced. In FIG. 26, a signal 2601 is a reproduction signal of the bar code recording area 2502 and a signal 2602 is a reproduction signal of the bar code type mark 2503. The reflection film of the bar code type mark 2503 is removed by the laser trimming and the reflection light does not return to a detection system, so that as shown in the signal 2602, the reproduction signal is largely lowered at a bar code part, and at the other parts a reproduction signal 2603 from the concavo-convex pit is generated. In the reproduction signal the reproduction signal 2603 from the concavo-convex pits is removed by a low pass filter, thus allowing the bar code type mark 2503 to be detected and demodulated.

A method for recording the medium specific ID disclosed in Reference 2 is suitable for a recording system of the medium specific ID because the data cannot be rewritten because of a write-once recording achieved by removing the reflection film using the laser trimming and recording the data.

In addition, a system disclosed in Reference 3 is a method for recording the medium specific ID on a phase change type recording medium and this system has been widely used in the rewritable phase change type recording medium. The area on which the medium specific ID is recorded and a shape of a mark to be recorded are the same as Reference 2, thus the detailed explanations are herein omitted.

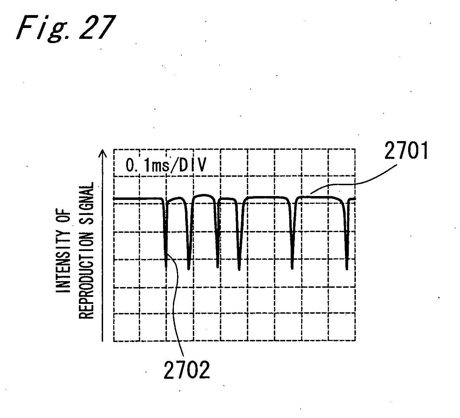

Reference 3 discloses a method for forming marks with difference reflectance ratios as same as the bar code type mark 2503 made of a crystallization part and a non-crystallization part by temporarily interrupting crystallization in the BCA area 2502 in a step of crystallizing a recording layer, namely, an initialization step in a phase change disk manufacturing step. A reproduction signal in this method is shown in FIG. 27. An area where the initialization is interrupted in the initialization step is made into a non-crystallization part and this becomes an area having a lower reflectance ratio because a laminated layer is set so as to satisfy a non-reflection condition by an optical design. As a result, it is possible to acquire a reproduction signal 2702 at the bar code type mark 2503. According to this system, since the bar code type mark is formed by the crystallization part and the non-crystallization part, it is possible to falsify the bar code type mark by using a rewritable recording apparatus. In order to prevent this, the BCA area 2502 is configured by a flat plate so as to make it difficult to track an optical beam for recording, thus allowing falsification of the recording apparatus to be made difficult.

The above-described medium specific ID recording method has been widely used, however, the recording medium and the recording method capable of recording (writing) the data once can record the medium specific ID while preventing falsification of the data.

As a method for performing the write-once recording, the following methods are available.
(1) It has a configuration in which a recording layer mainly composed of an organic dye on a substrate is formed and a reflection layer made of a mechanical material is laminated on a rear side of the recording layer, and has the following recording mechanism: when the recording layer absorbs a laser beam, heat is generated; the recording layer is melted and dissolved to soften the substrate due to the heat; a mixture of a recording layer material and a substrate material is formed on a interface between the substrate and the recording layer, thus forming a recording pit (refer to Reference 4).
(2) It has the same configuration as described above, and has the following recording mechanism: when the recording layer absorbs a laser beam, heat is generated; the recording layer is dissolved due to the heat; and the remaining resolvent of the material of the recording layer on the interface between the substrate and the recording layer forms a recording pit(refer to Reference 5).
(3) It has the same configuration as described above, and having the following recording mechanism: when the recording layer absorbs a laser beam, heat is generated; the recording layer is dissolved due to the heat to generate gas and form a gap in the recording layer, thus forming a recording pit (refer to Reference 5).
(4) It has the same configuration as described above, and has the following recording mechanism: when the recording layer absorbs a laser beam, heat is generated; the recording layer is dissolved due to the heat to generate gas and deform the reflection layer into a convex shape due to a pressure, thus forming a recording pit (refer to References 6 and 7).
(5) It has the same configuration as described above, and has the following recording mechanism: when the recording layer absorbs a laser beam, heat is generated; the recording layer is dissolved to soften the substrate due to the heat and deform the substrate. The substrate and reflection layer are deformed due to a pressure of the gas generated by dissolution of the recording layer, thus forming a recording pit (refer to References 6 and 7).

The above-described write-once recording method is a method to record the recording pit by deformation of the substrate or the like and any reproduction signals from the recording pit are detected as a signal of which reflection light amount is reduced.

### <References>

Reference 1: Japanese Patent No. 318493
Reference 2: Japanese Patent No. 3097917
Reference 3: JP,2002-50088,A
Reference 4: JP,02-168446,A
Reference 5: JP,02-244437,A
Reference 6: JP,03-63943,A
Reference 7: JP,03-58333,A

### Disclosure of Invention

### (Problems to be solved)

The above-described recording method with a medium specific ID has a problem such that the medium specific ID is falsified.

In Reference 3, since the bar code type mark is formed by using the crystallization part and the non-crystallization part, it is possible to falsify the bar code type mark by using the rewritable recording apparatus. In order to prevent this, the BCA area 2502 is configured by a flat plate so as to make it difficult to track an optical beam for recording. However, it is possible to write the- bar code type mark without performing tracking control with a groove by re-recording data on a phase change type recording film by an optical beam for recording using an apparatus having a precise feeding mechanism to form the crystallization part and the non-crystallization part. Thereby, the medium specific ID that should be a specific number for each recording media can be changed and this lead to infestation of the illegal copy.

According to Reference 1, the reflection film is also removed by the laser trimming to record the bar code type mark, so that falsification is difficult. However, a reproduction waveform thereof is made into a signal of which reflection light amount is reduced at a part of the bar code type mark as shown in FIG. 26. This reproduction signal resembles that according to the recording method disclosed in Reference 3 very well. If the BCA area 2502 is configured by a concavo-convex pit and the bar code type mark is formed by using the crystallization part and the non-crystallization part in the recording method disclosed in Reference 3, it is possible to acquire the substantially same signal.

In this case, it is very difficult for the recording and reproducing apparatus to determine if the mark is the bar code type mark of which reflection film is removed by the laser trimming or the mark due to the non-crystallization part. Particularly, the recording and reproducing apparatus is required to support recording/reproducing of many recording media and in consideration of these compatibilities, it is almost impossible to distinguish the bar code type mark of which reflection film is removed by the laser trimming from the mark due to the non-crystallization part.

This means that the illegal disk forming the bar code type mark due to the non-crystallization part on the BCA area 2502 is operated as a normal disk even if it is used in the apparatus disclosed in Reference 1. As described above, the bar code type mark due to the non-crystallization part can be rewritten and falsified and this results in infestation of the illegal copy also in Reference 1.

### (Solving Methods)

The present invention is made taking the foregoing problems into consideration and an object of which is to provide an optical recording medium capable of effectively protecting the information from rewriting and falsification, for example, an optical recording medium suitable for copyright protection, and an apparatus for recording and reproducing the information in and from such an optical recording medium.

An optical recording medium according to the present invention has a data recording area in which data can be rewritten and a write-once area in which data can be written only once but not erased. In the data recording area, reflectance ratios are different in a part where the data is recorded and a part where the data is not recorded. A reflectance ratio of a recording pit formed in the write-once area is higher than the higher one of reflectance ratios in the part where the data is recorded and the part where the data is not recorded in the data recording area.

According to the recording medium having such a configuration, it is possible to record the recording pit of which reflectance ratio is increased in a write-once area. Therefore, the reflection light amount of the recording pit recorded in the data recording area is more decreased as compared to the state that the recording pit is not recorded, and on the contrary, the reflection light amount of the recording pit recorded in the write-once area is increased as compared to the state that the recording pit is not recorded, so that they can be distinguished and it is possible to easily detect the falsification of the medium specific ID information. Therefore, it is possible to easily detect the illegal disk having the medium specific ID recorded in a crystal of the phase change type and in a non-crystal thereof. Therefore, by using the optical disk having the data recorded therein in a method according to the present invention and the optical disk recording and reproducing apparatus according to the present invention, it is possible to realize a system having a very high security with respect to recording of the accounting information of the copyright protection and the content distribution or the like.

An optical disk apparatus according to the present invention serves to record data in an optical recording medium having a data recording area in which data can be rewritten and a write-once area in which data can be written only once but not erased. The optical disk apparatus includes an optical head that irradiates a laser beam to the optical recording medium to record the data, a laser driver that controls the operation of recording data by the optical head, and a controller that controls the operation of the laser driver. The controller controls the laser driver so that the laser beam having heat amount between three times and twenty five times heat amount necessary for recording the rewritable data in the data recording area is irradiated to the write-once area to record the data therein.

Further, in another optical recording medium according to the present invention, the medium specific ID allocated specific to the recording medium is encrypted with a public key generated from information related to a position where the medium specific ID is recorded and a private key, and then recorded. Such an optical recording medium can also provide a system with a very high security for the copyright protection or the like.

### (More Effective Advantage than Conventional Arts)

According to the present invention, since it is possible to discriminate data recorded in the write-once area from data recorded in the rewritable data area, if the medium specific ID is recorded in the write-once area, the data can be protected from the illegal copy and it is possible to provide a recording medium capable of being rewritten. In addition, encryption of the medium specific ID with information about the position where the medium specific ID is recorded allows the system to be protected from falsification of the medium specific information due to the illegal change of the optical disk apparatus. In addition, the write-once area can be used not only as the media specific information but also as information about-accounting and management of the content. In this case, encryption of data to be recorded in the write-once area with the medium specific ID allows data recorded in the write-once area to be protected from falsification.

### Brief Description of Drawings

FIG. 1 shows an area of an optical disk according to an embodiment of the present invention.
FIG. 2 shows steps of manufacturing a master disk of the optical disk according to the embodiment of the present invention.
FIG. 3 shows steps of manufacturing the optical disk according to the embodiment of the present invention.
FIG. 4 is a block diagram of an optical disk apparatus for recording a medium specific ID according to the embodiment of the present invention.
FIG. 5A shows a recording format of an ECC block (a recording block) of data to be recorded in a write-once area.
FIG. 5B shows a configuration in which n recording blocks are repeated.
FIG. 6 is a table showing sync data to be added to data recorded in the write-once area.
FIG. 7 is a table showing a modulation rule of data to be recorded in the write-once area.
FIG. 8 shows a allocation of data to be recorded in the write-once area in a sector.
FIG. 9A shows data to be recorded in the write-once area, FIG. 9B shows a recording mark, and FIG. 9C shows a waveform of a laser light for recording, as being related respectively.
FIG. 10A shows a waveform of a reproduced signal of data recorded in the write-once area.
FIG. 10B shows a waveform of a reproduced signal of data recorded in a rewritable data recording area.
FIG. 11A shows a state that a recording pit is recorded in a track groove in the write-once area.
FIG. 11B shows a cross section of the recording pit recorded in the write-once area.
FIG. 12 shows a relation between a recording power when a data pit to be recorded in the write-once area is formed and intensity of a reproduction signal.
FIG. 13 is a block diagram of an optical disk apparatus for recording and reproducing data recorded in the write-once area and data recorded in the data recording area.
FIG. 14 is a detail block diagram showing a write-once signal demodulator.
FIG. 15 is a block diagram of an optical disk apparatus according to a second embodiment of the present invention.
FIG. 16A shows a reproduction signal when a data pit is recorded while synchronizing with the largest change position of a wobble of a grove.
FIG. 16B shows a reproduction signal when a data pit is recorded while synchronizing with a zero-cross position of a wobble of a grove.
FIG. 17 is a block diagram of an optical disk apparatus according to a third embodiment of the present invention.
FIG. 18 shows a mechanism of encryption and decryption of a medium specific ID.
FIG. 19 is a block diagram of an optical disk apparatus for recording and reproducing data recorded in the write-once area and data recorded in the data recording area according to a third embodiment.
FIG. 20 is a flowchart of the processing for determining whether the medium specific ID exists.
FIG. 21 shows allocation of each area in a conventional optical disk including a key bunch area.
FIG. 22 shows a recording medium according to a fifth embodiment of the present invention;
FIG. 23 is a block diagram of an optical disk apparatus for recording and reproducing data recorded in the write-once area and data recorded in the data recording area according to a sixth embodiment.
FIG. 24 shows a mechanism of a copyright protection with a conventional medium specific ID.
FIG. 25 shows a conventional optical disk in which the conventional medium specific ID is recorded.
FIG. 26 shows a reproduction signal of the conventional medium specific ID which is recoded by laser trimming.
FIG. 27 shows a reproduction signal of the conventional medium specific ID that is recoded by initialization processing of a phase change type film.

### Best Mode for Carrying out the Invention

With reference to the accompanying drawings, the preferred embodiments of the present invention will be described below.

### First Embodiment

At first, an outline of a rewritable optical recording medium having a medium specific ID that cannot be rewritten according to the first embodiment of the present invention will be described below taking a recording medium of a disk shape as an example. The explanation is made below in the order of a step of manufacturing a master disk, a step of manufacturing a disk, a method and an apparatus of recording the medium specific ID, and a method and an apparatus of reproducing the medium specific ID.

### (Structure of Optical Disk)

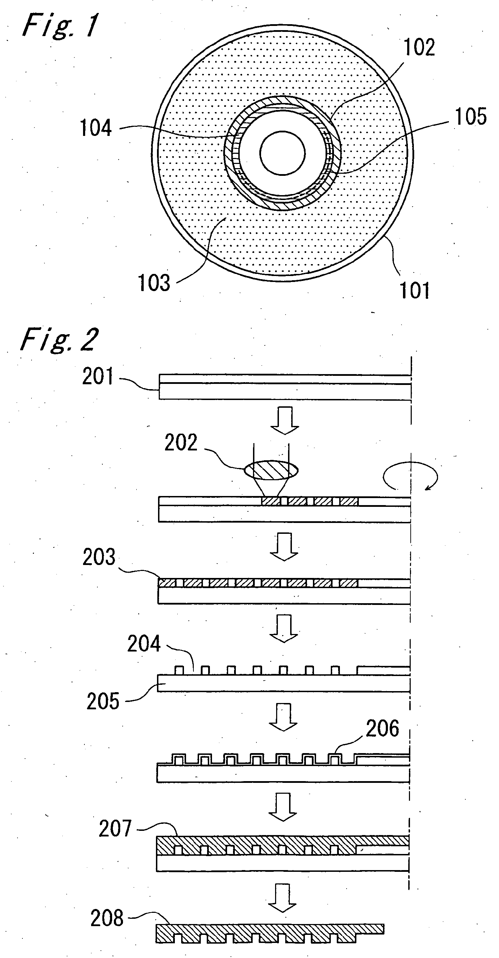

FIG. 1 shows an optical disk according to the present invention. The optical disk according to the present invention is configured by a phase change type of recording film and has a diameter about 50 mm, an inner diameter 11 mm, and a thickness about 0.8 mm. Through a transparent substrate of a thickness about 0.1 mm, the information is recorded and reproduced by using an optical head of a wavelength 405 nm and the number of apertures (NA) about 0.85.

In FIG. 1, an optical disk 101 has a lead-in area 102 having the information that is necessary as a system such as the control information for controlling the optical disk and the replacement information or the like and a data recording area 103 for storing user data. The lead-in area 102 may include a write-once recording area 104 for storing data that cannot be falsified.

The data recording area 103 is an area in which the data can be rewritten. The write-once recording area 104 is an area in which the data can be recorded once and the data recorded once cannot be deleted. Particularly, according to the present invention, in this write-once recording area 104, medium specific ID (identifier) information 105 which is an identification number unique to the optical disk is recorded as write-once information.

The data recording area 103 is located in the range of a radius 23.8 mm to a radius 12.25 mm. The lead-in area 102 has a width of 0.5 mm and is located in the range of a radius 12.25 mm to a radius 11.75 mm. The write-once recording, area 104 provided in the lead-in area 102 is located in the range of a radius 11.95 mm to a radius 11.75 mm. Tracks of the lead-in area 102 and the data recording area 103 are formed by continuous spiral grooves. A track pitch (an interval between the grooves) of the lead-in area 102 is 0.35 µm, while a track pitch of the data recording area 103 is 0.32 µm. The track pitches are continuously changed in the range of about 30 µm at a boundary of the lead-in area 102 and the data recording area 103, however, the track is a continuous and spiral groove. In the track, an address for accessing is recorded by a wobble of the groove.

In the data recording area 103, the rewritable recording data is recorded in the groove as an amorphous recording pit. This amorphous recording pit is formed by the same method as that used in a rewritable DVD or the like. More specifically, the amorphous recording pit is formed by modulating intensity of a recording laser light in a multi-pulse modulation and quenching a recording film.

In the lead-in area 102, the control information for controlling a recording power and a recording pulse timing of the optical disk or the like is configured by information and area necessary for operation of the optical disk as a system, such as an area with a wobble of the groove recorded in advance and a test area for learning the recording power.

Making the rack pitch of the lead-in area 102 wider than that of the data recording area 103 is to enable the control information recorded by the wobble of the groove of the track to be stably read out.

### (Manufacturing Step of Optical Disk).

Next, the step of manufacturing an optical disk according to the embodiment of the present invention will be described below. At first, a manufacturing step of master disk of the optical disk will be described with reference to FIG. 2.

As a sensitive material, a glass plate 201 on which a positive type photo resist is evenly applied is prepared. A desired groove pattern is exposed by a cutting machine 202 using a far-ultraviolet laser of a wavelength 248 nm. In this time, the cutting machine 202 records the address and the control information in a part of the lead-in area 102 while wobbling a light beam on the basis of a signal from a formatter. The track pitch is changed between the lead-in area 102 and the data recording area 103 by changing a feed amount of the cutting machine. Exposure is completed when it reaches the farthest outer periphery of the data area 103.

By the above-described step, a latent image 203 of a desired groove pattern is recorded in the glass plate 201. a master disk 205 on which a groove pattern 204 is formed is manufactured by developing and drying the latent image 203 while rotating this glass plate. A nickel film 206 is formed on the master disk 205 in a spattering method and nickel plating using the nickel film 206 as an electrode is carried out, thereby resulting in manufacturing a thin plate 207 made of nickel. The thin plate 207 is separated, resist is removed, a rear surface of the thin plate 207 is polished, and the thin plate 207 is punched out in a desired shape, thus to manufacture a stamper 208.

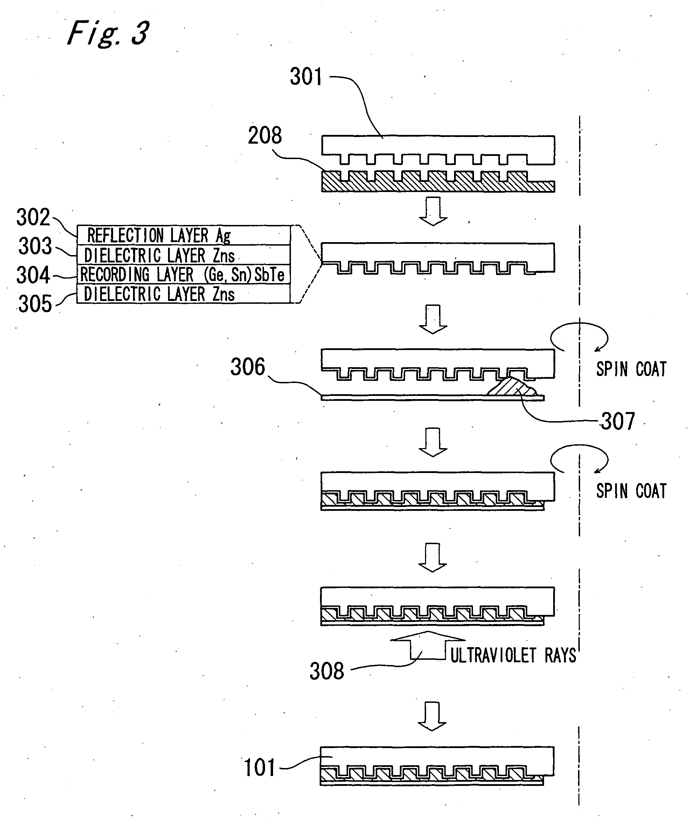

Next, with reference to FIG. 3, the manufacturing step of the optical disk 101 will be described below.

Using an injection molding apparatus to which the stamper 208 manufactured in the above-described method is attached, the injection molding using a polycarbonate as a material is carried out. Thus, a molded substrate 301 of thickness of 0.7 mm on which a groove shape of the stamper 208 is transcribed is manufactured. On a surface on which a groove of the substrate 301 is transcribed, a reflection layer 302 made of Ag of a thickness 80 nm, a dielectric layer 303 made of ZnS of thickness 20 nm, a recording layer 304 made of (Ge,Sn)SbTe of a thickness 10 nm, and a dielectric layer 305 made of ZnS of thickness 57 nm are laminated in a spattering method. On a spin coater, an ultraviolet cured resin 307 is dropped on the layers, and a polycarbonate sheet 306 of thickness about 90 µm on which the ultraviolet cured resin is applied is overlapped on the dielectric layer 305. After that, the spin coater is rotated to cut the extra ultraviolet resin. When thickness of the ultraviolet resin becomes about 10 µm, rotation of the spin coater is stopped and the ultraviolet rays is irradiated from an ultraviolet ray source 308, thereby curing the resin 307.

According to these steps, the optical disk 101 is formed. When the recording layer 304 of the above-described optical disk 101 is formed according to the spattering method, the entire surface of the recording layer 304 is the amorphous state and the crystallization processing of the recording layer 304, generally referred to as an initialization step, is required. This crystallization processing is normally carried out by scanning the entire surface of the recording layer 304 with an even light by an initialization apparatus having the laser light of high output of a wavelength of 650 nm mounted thereon. Due to this processing, a reflectance ratio of the recording film 304 becomes about 20%. After these steps are completed, the medium specific ID information 105 is recorded.

### (Optical Disk Apparatus)

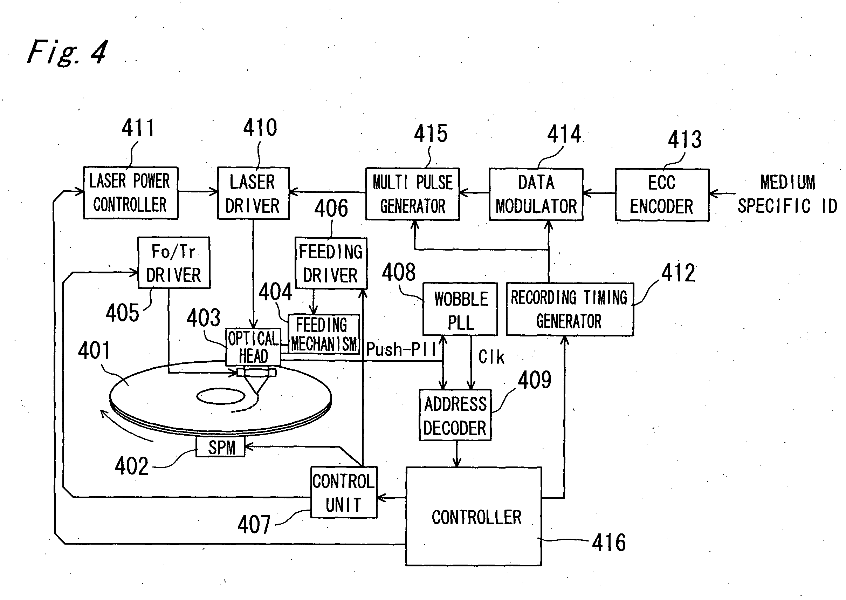

FIG. 4 explains a configuration of an optical disk apparatus for recording a medium specific ID according to the embodiment of the present invention.

In FIG. 4, a motor 402 rotates an optical disk 401 storing the medium specific ID information 105. An optical head 403 records the medium specific ID information 105 in the optical disk 401. A feeding mechanism 404 moves an optical head 403 in a radius direction. A focus and tracking driver 405 drives focus and tracking actuators of the optical head 403. A feeding driver 406 drives the feeding mechanism 404. A control unit 407 controls the focus and tracking driver 405, the feeding driver 406, and the motor 402. A PLL 408 generates a clock for reading an address from a push-pull signal from the groove. An address decoder 409 demodulates address information recorded on the wobble from the push-pull signal from the groove. A laser driver 410 modulates a laser power of the optical head 403 to record the medium specific ID information 105. A laser power controller 411 controls a power of the laser driver 410. A recording timing generator 412 generates a recording timing of the medium specific ID information 105. An ECC encoder 413 adds an error correction code to the medium specific ID. A data modulator 414 converts information of an ECC encoder 413 into bit data. A multi pulse generator 415 generates laser modulation data by making the bit data of the data modulator 414 into multiple pulses. A controller 416 is configured by a microcomputer for entirely controlling recording of the medium specific ID information 105. Optical parameters of the optical head 403 for recording the data include NA = 0.85 and a laser wavelength = 405 nm.

### (Medium Specific ID Information)

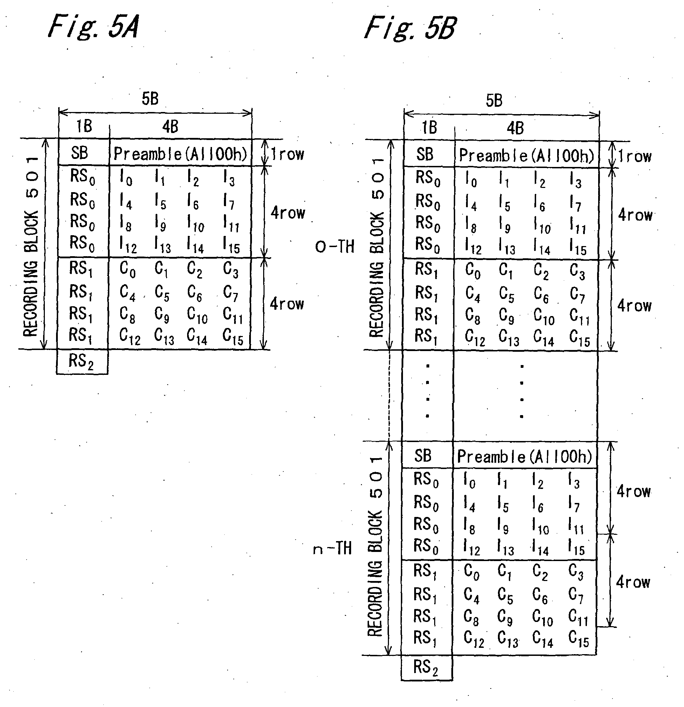

The medium specific ID is blocked by the ECC encoder 414 and added with parity data to become an ECC block. The ECC block is PE-modulated by the modulator 414 and added with a preamble and a sync pattern. FIG. 5A shows the configuration of the PE-modulated recording block 501 to which the preamble and the sync pattern are added. I₀ to I₁₅ are medium specific IDs having information of 16 bytes. C₀ to C₁₅ are parities of I₀ to I₁₅. Preambles configured by 0 are added to the heads of these data blocks.

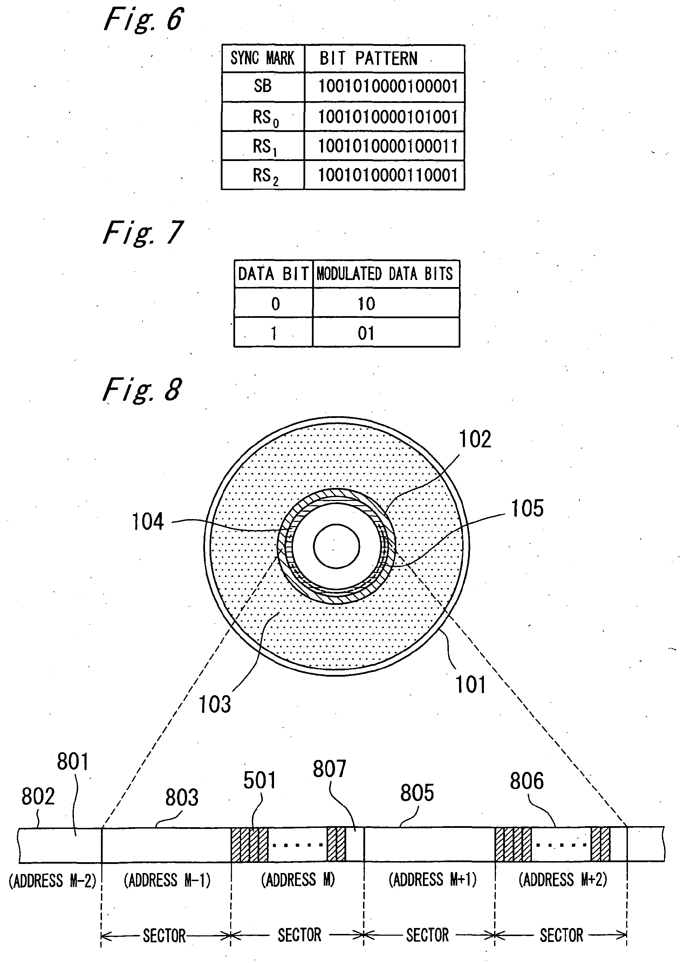

According to a rule shown in FIG. 7, C₀ to C₁₅, I₀ to I₁₅, and preamble parts are PE-modulated so that 1 byte of information becomes the double number of bits and therefore each symbol length of C₀ to C₁₅, I₀ to I₁₅, and preamble parts is 16 bits. PE-modulating for recording thus described facilitates extraction of a reproduction clock from a reproduction signal of the medium specific ID information 105.

As shown in FIG. 5A, sync mark SB and RS₀ to RS₂ is added to a head of each line. FIG. 6 shows bit patterns of the sync marks SB and RS₀ to RS₂. The sync mark is configured by 16 bits, and pit sequence after modulation has a pattern in which 0 that does not appear by the PE-modulation appears continuously in two or more bits. Thus a sync pattern can be detected easily from the reproduction signal. It is also possible to record information in units of integral number times of 16 bytes by repeating the structure of a recording block 501 shown in FIG. 5A plural number times. FIG. 5B shows a configuration when repeating n pieces of the recording block 501. In this configuration, a sync code SB, RS₀, RS₁, and RS₂ are added as a marker of the preamble, a marker of the recording data, a marker of parity, and a marker of end of the data, respectively. The recording block 501 including the information of the medium specific ID is recorded in a predetermined address of the write-once recording area 104 of the optical disk 101.

FIG. 8 shows a configuration of the medium specific ID information 105 that is recorded in the optical disk 101. In a recording track 801 in the write-once recording area 104, sectors 804 to 806 are sectors in which the medium specific ID information. 105 is recorded. One sector is composed of a plurality of recording blocks. According to the first embodiment, the medium specific ID information 105 is recorded over two sectors, however, it is not continuously recorded from the sector 804. After recording the information by one sector, the information is recorded in a next sector 806 leaving a sector 805 to which the information is not recorded. A reason of this will be described later.

### (Recording of Medium Specific Information)

A specific method of recording the medium specific ID information 105 will be described below. The medium specific ID information 105 is divided into a predetermined block unit (a recording block) to be recorded there.

A controller 416 controls the feeding driver 404 and the focus and tracking driver 405 based on address read out by the address decoder 409 to seek a predetermined sector (a sector of an address M in FIG. 8) which records the medium specific ID information 105 so that the recording block 501 is recorded in synchronization with a start position of the predetermined sector on the basis of timing of the recording timing generator 412. In an area 803 of an address M-1, in order to provide a reference level for demodulating the medium specific ID information 105, a recording film 304 of this area 803 is initialized into the crystallization state. Initialization of the recording layer into the crystallization state allows a reference level for detecting the recording pit in the write-once area of which reflectance ratio is higher than that of the data recording area of which the recording layer is in the crystallization state, to be easily extracted from the reproduction level of a sector before the sector to be reproduced. Thus it is possible to simply configure a demodulation circuit. The details of this will be described in the explanation of a reproduction method of the medium specific ID information 105 to be described later.

According to the present embodiment, it is assumed that the write-once recording area 104 and the data recording area 103 have the same sector structure. A recording start position of the data recorded in the write-once recording area 104 coincides with a start position of the sector. These sectors are discriminated by a wobble of the groove to which the address information is modulated and recorded. A clock for recording the data is also generated from a wobble signal by a PLL 408. It is not necessary to make the sector structure the same between the write-once area and the data area. However, it is not preferable to make the sector structures different, because identification of the address is complex by eccentricity in the vicinity of the boundaries between those areas when a recording system and a modulation frequency of the address are changed in the write-once area 104 and the data recording area 103 or the lead-in area 102.

In the write-once recording area 104 and the data recording area 103, the recording format is different, however, the formats of the addresses are made the same. Thereby, a high speed of seeking can be realized. However, due to such a configuration, a recording density and a recording format are different between the write-once recording area 104 and the data recording area 103, so that as shown in FIG. 8, a part 807 without recording appears in a sector area. Thus, by allowing the part 807 in which data is not recorded in the sector area, it becomes possible to conform the start position of the recording block 501 to the start position of the address, so that the start position can be easily detected.

In addition, when a size of the recording block 501 is large and the block is located in a plurality of sector areas, as shown in FIG. 8, a sector 805 in which the medium specific ID information is not recorded is provided between sectors 804 and 806 in which the medium specific ID information 105 is recorded, because the reflectance ratio of a part of a recording pit 902 is increased and this makes the demodulation of the address difficult. By providing a sector where the specific number information is not recorded, the address can be securely read out in that sector, so that the area from which the address can be read exists in the area in which the medium specific ID information 105 is recorded. Therefore, even if wrongly shifts to other track occurs due to a damage of the track during reading the information, the information of the address can be confirmed so as to realize the stable reproduction. In addition, it becomes easy to access the area in which the medium specific ID information 105 is recorded. A recording format of the medium specific ID information 105 is described as above.

### (Formation of Recording Pits in Write-once Area)

Next, a method for recording the data (a method for forming a record pit) in the write-once area 104 will be described below.

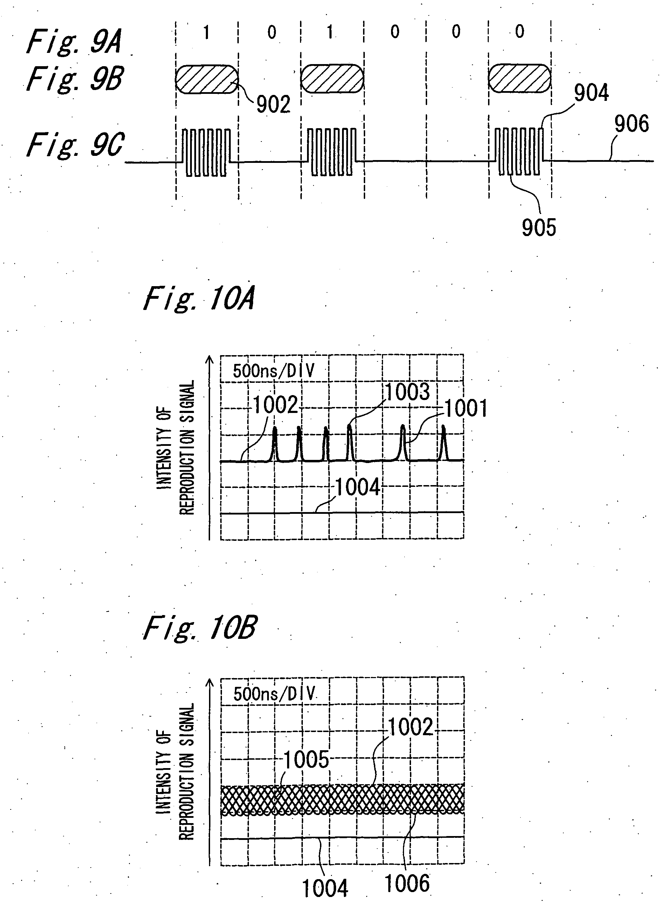

The recording block 501 generated by the data modulator 414 is recorded by dividing one bit into plural multi-pulses to irradiate the laser by the multi pulse generator 415. FIG. 9 shows a waveform of a laser pulse, a recording bit sequence, and a recording mark when recording data "1" and "0". FIG. 9A shows the recording data to be recorded, FIG. 9B shows recording pits formed on the optical disk 401, and FIG. 9C shows a recording laser waveform for forming a recording pit 902, respectively. The recording laser waveform has a peak power 904, a bottom power 905, and a bias power 906.

According to the present embodiment, in order to form the recording pit 902, the six multi-pulses are used. Assuming that a linear speed of the optical disk 401 where the information is recorded is 1 m/s, a width of the peak power 904 of the multi-pulse is 40 ns, an interval between the multi-pulses is 80 ns, the bottom power 905 is 0.1 mW, and the bias power 906 is 2 mW, the peak power 904 of recording in the range of 9 mw to 11 mw can provide preferable recording of the information.

FIG. 10A shows a reproduction signal of the recording pit 902 that is recorded according to the above-described method. In FIG. 10A, the signal 1001 is a reproduction signal when recording the medium specific ID information 105, the level 1002 is a reproduction signal level from the recording film 304 in the crystallization state, the level 1003 is a reproduction signal level of the recording pit 902, and the level 1004 is a reproduction signal level corresponding to a state in which the reflection light from the optical disk is zero.

When recording the information in the optical disk according to the above-described recording method, the reproduction signal 1003 from the recording pit 902 is generated so that the reflection light amount or intensity is increased. FIG. 10B shows a reproduction signal when recording a recording pit of the amorphous state in the recording layer 304 by a conventional rewritable type recording method according to 1-7 modulation rule. In FIG. 10B, the signal 1005 shows a reproduction signal when recording the recording pit according to the rewritable recording method and the signal 1006 is a reproduction level of the recording pit in the amorphous state. In this case, the rewritable information recording processing was carried out with a liner speed 5 m/s, a peak power 4.8 mW, a bias power 2.4 mW, and a bottom power 0.1 mW. Since the rewritable information is recorded as a recording pit in the amorphous state, the reflection light amount from an area where the recording pit is recorded is decreased.

The conventional rewritable recording pit is recorded in the amorphous state from the crystallization state when data is not recorded, and the reflection light amount from the recording pit is decreased than that when the data is not recorded. On the contrary, the reflection light amount of the recording pit 902 formed in the write-once area in the optical disk according to the present embodiment is increased than that when data is not recorded. Therefore, if the optical disk according to the present invention is used, it is possible to easily distinguish whether the data is read out from the rewritable area or the write-once area on the basis of its reflection light amount when reproducing the data. In addition, the reflection light amount of the part of the recording pit 902 in the write-once area of the optical disk according to the present embodiment is made higher than the reflection light amount that is acquired in the crystallization state in the phase change type recording. Thereby, it is not possible to realize the reflection amount from the write-once area by the rewritable phase change type recording.

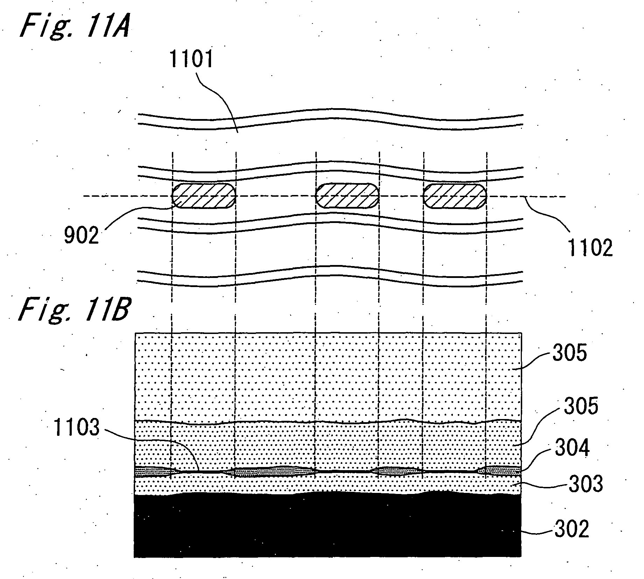

The state of the recording pit 902 that is formed in the write-once area according to the above-described method will be described with reference to FIG. 11A and FIG. 11B. FIG. 11A shows the state that the recording pit 902 is recorded in a track groove and FIG. 11B shows the cross section of the recording pit 902 by a line 1102 in FIG. 11A. As shown in FIG. 11A, the recording pit 902 is formed in a recording groove 1101 for recording the data.

In FIG. 11B, the reflection layer 302, the protection layer 303, the recording layer 304, and the protection layer 305 are laminated in this order. In the area where the recording pit 902 is formed, deformation occurs around a recording layer 1103 and the thickness of the recording layer 1103 is decreased. Since the absorption amount of the light by the recording layer is decreased at the part where the thickness of the recording layer is made thicker, more light reaches the reflection layer 302 and this light is reflected by the reflection layer 302. Therefore, at the part of the recording pit 302, the reflection light amount is increased. This recording mode is irreversible change due to the deformation of the recording layer 304 and achieves write-once recording. The deformation of the recording layer 304 is also caused by rotating the optical disk 401 with a low linear speed of 1 m/s and applying a laser power larger than the power in a normal rewritable recording by 5 to 10 times per unit volume.

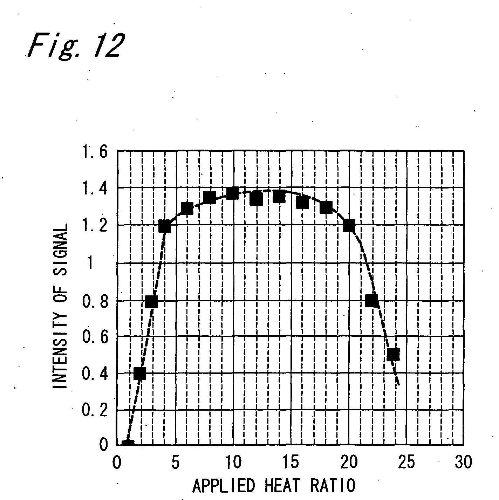

FIG. 12 shows a relation between the reproduction signal amount and the recording power of the recording pit 902 in the write-once area. A horizontal axis of FIG. 12 shows a ratio between amount of heat per unit volume applied by the laser irradiation in order to form a pit of the write-once recording and amount of heat per unit volume applied by the optimum laser irradiation for forming the rewritable recording pit of phase change type. The amount of heat amount per unit volume is proportional to the laser power to be irradiated and the irradiation time of the laser and is inversely proportional to the linear speed which is a moving speed of the recording layer 304 when recording. A vertical axis of FIG. 12 shows a difference between the reflectance ratio of the pit 902 formed by the write-once recording and the reflectance ratio when the recording film 304 is in the crystallization state, namely, a reproduction signal amount by the write-once recording.

As shown in FIG. 12, recording is started from the point where the ratio of heat to be applied per unit volume is twice, and the signal amount is saturated and constant in a range in which the ratio is about four times to 20 times. Further, if the heat amount to be applied is increased, the reflection layer 302 is broken,and the laser light is not reflected. Thereby the signal amount is decreased.

Thus, the appropriate heat amount required to form the recording pit 902 of the present invention which provides the increased amount of reflection light after recording is 2 to 22 times the heat amount to be applied per unit volume by the laser irradiation suitable for forming the phase change type of rewritable recording pit. Furthermore, in order to form a more preferable pit, the range of 4 to 20 times is the optimum.

According to the recording method of the conventional laser trimming, the protection film may be broken and thus it is difficult to acquire reliability sufficient. On the contrary, according to the present invention, since there is no damage of the protection film due to recording of the pit 902, it is possible to secure reliability as same as the conventional optical disk. Specifically, even in an acceleration test under temperature 80°C and humidity 80%, lowering of the reliability such as corrosion was not measured for not less than 2,000 hours. Thus, it is possible to realize an optical recording medium that is excellent in environmental reliability.

It is noted that, according to the present embodiment, in order to make the shape of the recording mark stable, the multi-pulse recording is carried out, however, it is not necessary to always carry out the multi-pulse recording. If the heat amount shown in FIG. 12 can be achieved, the write-once recording is possible. In addition, according to the present embodiment, the recording medium of optical disk shape, however, the present invention is not limited to the shape of the disk. In addition, the above-described method for forming the pit can be applied to a recording method of write-once data when it is desired that the reflectance ratio after recording data becomes higher than that when data is not recorded.

### (Reproduction of Medium Specific ID Information)

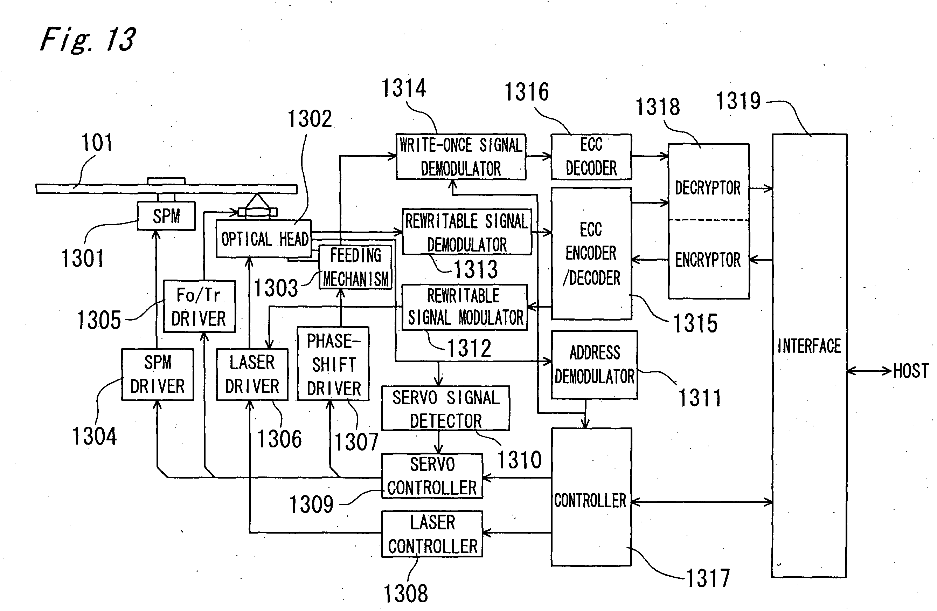

Next, a method for reproducing the medium specific ID information 105 will be described below. FIG. 13 shows a block diagram of an optical disk apparatus for reproducing the medium specific ID information 105.

In the optical disk apparatus shown in FIG. 13, a motor 1301 rotates the optical disk 101. An optical head 1302 records and reproduces data. A feeding mechanism 1303 moves the optical head 1302 to a radius direction. A driver 1304 drives the-motor 1301. A driver 1305 drives an actuator of the optical head 1302 in order to carry out focus and tracking operations. A laser driver 1306 drives the laser of the optical head 1302 to record or reproduce data. A phase-shift driver 1307 drives the feeding mechanism 1303. A laser controller 1308 controls the power of the laser. A servo controller 1309 controls the motor driver 1304, the focus and tracking driver 1305, and the phase-shift driver 1307 so as to seek arbitrary addresses and control focus and tracking controls or the like. A servo signal detector 1310 calculates a signal for the servo control. An address demodulator 1311 demodulates the address from a push-pull signal. A rewritable signal modulator 1312 modulates data in order to record the rewritable information with a phase change type of recording pit. A rewritable signal demodulator 1313 demodulates a phase change type of recording pit signal that is rewritable type information. A write-once signal demodulator 1314 may demodulate a write-once signal. An ECC encoder and decoder 1315 corrects an error of the rewritable signal and performs a Read-Solomon coding. An ECC decoder 1316 performs error correction of the medium specific ID information that is recorded as the write-once information. A decryptor/encryptor 1318 encrypts the recording data and decrypts the reproduced data, using the medium specific ID. A controller 1317 is configured by a microcomputer to control the system. A host interface 1319 controls interface with a host.

When the optical disk 101 is set in the optical disk apparatus, the controller 1317 controls the phase-shift driver 1307 through the servo controller 1309 to cause a phase system to move to the vicinity of address M-1 previous to address M where the medium specific ID is recorded. After that, the focus and tracking control is conducted, and the address decoder 1311 reads the current address. The servo controller 1309 carries out multi-jump and one track jump based on a difference between the read address and the address M-1. Thus seek of the address M-1 is completed. As described above, in an area 803 of the address M-1, the recording layer 304 is initialized to an erase level. The write-once signal demodulator 1314 demodulates the recording pit 902 that is recorded as the write-once information On the basis of the erase level.

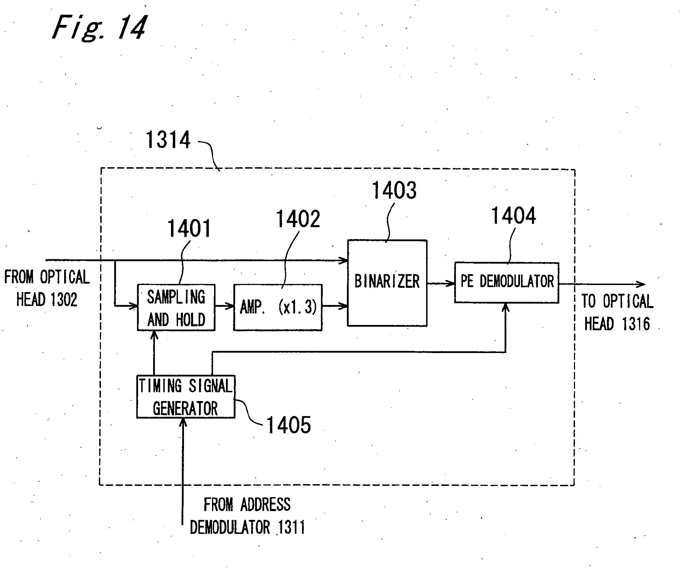

FIG. 14 shows a detailed configuration of the write-once signal demodulator 1314.

The write-once signal demodulator 1314 includes a sampling and hold 1401 for storing a reflectance ratio level in a crystallization state, an amplifier 1402 for multiplying the output of the sampling and hold 1401 by a predetermined number (in this embodiment, 1.3), a binarizer 1403 for comparing the output of the amplifier 1402 with a write-once signal, a PE demodulator 1404 for detecting a sync code and performing PE demodulation of the data, and a timing signal generator 1405 for controlling operations of the sampling and hold 1401 and the PE demodulator 1404 on the basis of information about the address. In the area of the address M-1, the sampling and hold 1401 samples the level of the signal. The signal level to be sampled in this time is a reflection light amount level for the crystallization state, because the area of the address M-1 is initialized to an erase level.

In the next address M, the sampling and hold 1401 is made into a hold state. The reflection light amount level of the crystallization state that is sampled is multiplied by 1.3 by the amplifier 1402 to be compared with an input signal, and the comparison result is binalized. In the address M, the recording medium specific ID information is recorded in write-once state as described above, and the reflection light amount is increased at the portion where the recording pit is formed. The binarizer 1403 compares the level of this increased reflection light amount with the level 1.3 times the reflection light amount in the crystallization state, thereby obtaining a recording bit stream. Further, sync code is detected from the recoding bit stream by the PE demodulator 1404, and the recoding bit stream is PE-demodulated. The pit stream data PE-demodulated is error-corrected by the ECC encoder 1316 to reproduce the medium specific ID.

The demodulated medium specific ID is used as a key for encryption and decryption of the recording data, by the decryptor/encryptor 1318 for encrypting or decrypting the data to be recorded and reproduced according to an instruction from a host. The recording and reproduction of the rewritable data is carried out with a linear speed 5 m/s and a data transmission rate 36 Mbps, a recording power of the laser 9.6 mW, and a bias power 4.5 mW.

Thus, according to the optical disk of the present embodiment, since the medium specific ID information can be recorded as a recording pit of which reflectance ratio is increased, demodulation of the data requires a particular circuit which is different from a circuit for demodulation when information is recorded as rewritable information. Therefore, for example, even if medium specific ID information is forged by the phase change type of rewritable pit, the medium specific ID information can not be reproduced, so that it is possible to realize very high security level. A method to change a section for demodulating the medium specific ID information to demodulate a signal forged by the phase change type of rewritable pit would be considered. However, it seems that the demodulating section cannot be changed by digitalizing the demodulating part and mounting it in an LST.

As described above, the optical disk storing the medium specific ID information and the optical disk recording and reproducing apparatus of the present invention according to the present invention can provide a system with a very high security for protection of a copyright. In addition, in order to record the medium specific ID information by tracking, several microns are sufficient as a width to record this information and a part for recording the rewritable data can be made wider, so that the present embodiment has a very effective advantage of increasing the recording capacity. This feature has the highest advantage when the present invention is used to an optical disk with a small diameter. In addition, since the information can be written in a non-rewritable write-once area as data, as compared to the case using the BCA, various types of information which should be prevented from falsification can be written.

### Second Embodiment

When the recording pit 902 that cannot be falsified is formed according to the method as shown in the first embodiment, the reflection light amount after recording is increased than that before recording. Therefore, in the wobble signal to be generated from the push-pull signal, a signal amount at a part where the recording pit 902 is formed is increased. In addition, in the optical disk in which address information is modulated and recorded at a zero cross position of the wobble signal, if the reproduction signal from the zero cross position is influenced by forming the recording pit 902, the reproduction of the address becomes impossible. If the address cannot be reproduced, for reproducing the address, it is necessary to seek the address M-1 previous to the address having the medium specific ID information 105 recorded therein (according to the first embodiment, the address M) and reproduce the information without checking the address assuming that the medium specific ID information 105 is recorded in the next address. According to the first embodiment, as shown in FIG. 8, in the case that the medium specific ID information 105 is recorded over a plurality of sectors, reliability upon reproduction is increased by providing a sector 805 having no information recorded.

However, according to the above-described method, the data of the medium specific ID information is necessarily reproduced without checking the address, so that reliability of reproduction is lowered. In addition, since the sector 805 having no information recorded is necessarily provided, a density of recording is also lowered.

In order to solve the above-described problem, the present embodiment provides means for recording the medium specific ID information 105 of which address is readable.

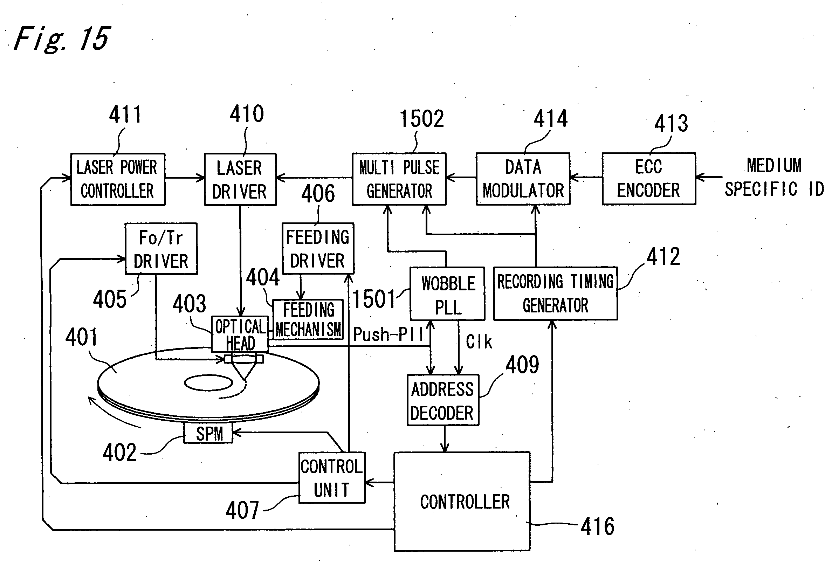

With reference to FIG. 15, a recording method of the medium specific ID information and a recording apparatus according to the present embodiment will be described below. FIG. 15 is a block diagram of a recording apparatus of the medium specific ID information according to the present embodiment. In FIG. 15, the basic structure is the same as that of the first embodiment and the same functional elements are represented by the same reference numerals as those in FIG. 4. The elements represented by the same reference numerals are the same as the first embodiment, and thus the detailed explanation thereof is herein omitted.

In FIG. 15, a PLL 1501 has a function to lock the wobble signal. A multi pulse generator 1502 generates multi-pulses in synchronization with the wobble to form a pit. The PLL 1501 is the same as the PLL in the first embodiment in that it is synchronized with the wobble. However, the PLL 1501 outputs a wobble phase position to the multi pulse generator 1502 in order to synchronize the position of the pit recording the medium specific ID information with the wobble, so that the multi pulse generator 1502 records the pit in synchronization with the wobble of the recording groove 1101 on the disk.

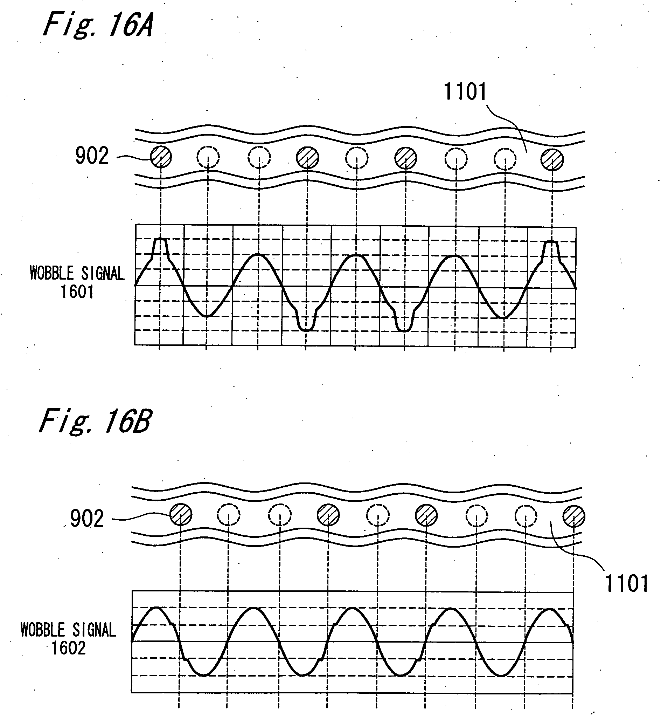

FIG. 16A and FIG. 16B shows a state of a track having the recording pit 902 of the medium specific ID information is recorded in synchronization with the wobble of the recording groove 1101 according to the recording method of the present embodiment and a wobble signal to be reproduced from the recording groove 1101 in this case. FIG. 16A shows the case that the recording pit 902 is formed in synchronization with a position where the wobble amount of the groove becomes the highest. When forming the recording pit 902 that cannot be falsified according to the method of the present invention, the reflection light amount is increased. Therefore, in the wobble signal to be generated from the push-pull signal, the signal amount in the part where the recording pit 902 is formed is also increased.

When recording the pin in synchronization with the position where the wobble amount of the groove is the highest, the wobble signal is made into a signal 1601 shown in a lower part of FIG. 16A. The optical disk according to the present embodiment modulates and records the address information at the zero cross position of the wobble signal, however, if the recording pit 902 is formed in synchronization with the position where the wobble amount of the groove is the highest as shown in the wobble reproduction signal 1601 in FIG. 16A, the zero cross position of the wobble signal is not influenced and the address can be detected stably.

In addition, as shown in a wobble reproduction signal 1602 in FIG. 16B, the recording pit 902 may be formed in synchronization with the position where the wobble amount of the groove becomes zero. In this case, the zero cross position of the wobble signal is not influenced and address can be stably detected.

As described above, forming the recording pit 902 in synchronization with the wobble of the groove allows an address to be detected certainly, even if the reflectance ratio is changed due to formation of the recording pit 902. When reproducing the medium specific ID information 105, by recording the information in synchronization with the wobble as described above, demodulation of the address in the recording area of the medium specific ID information on the optical disk becomes possible, thus resulting in the high speed seeking and high reliable reading operation. Further, the information is recorded in complete synchronization with not only the wobble information to compose the address but also the address information, and therefore it is also possible to secure synchronization of the medium specific ID information 105 on the basis of the synchronization information of the address upon reproduction thereof.

It is noted that according to the first embodiment, the reproduction of the medium specific ID information 105 is synchronized using the sync codes SB, RS₀ to RS₂, however, according to the second embodiment, these sync codes are not used, and thus a recording density of the medium specific ID information 105 can be improved.

### Third Embodiment

In the above-described embodiment, the security may be not secured sufficiently. For example, in the case that a program of a system controller of the optical disk apparatus is falsified, according to the above-described embodiment, the medium specific ID can be falsified.

According to the first and second embodiments, the medium specific ID information 105 is recorded in a predetermined address (according to the first embodiment, the address M) on the disk and a drive reads out information recorded at the address M to acquire the medium specific ID. If a false medium specific ID information is newly recorded in an address N that is different from the address M, and a small part of the program of the system controller is changed so that an address to read out the medium specific ID is N, then the medium specific ID at the address N can be recognized as a correct medium specific ID and the optical disk apparatus can be normally operated. Although falsification of the system controller program of the drive requires the art to some degrees, it can be considered that the falsification of the program is sufficiently possible in consideration of a case that a hacker attacks security in recent years. The present third embodiment can solve this problem.

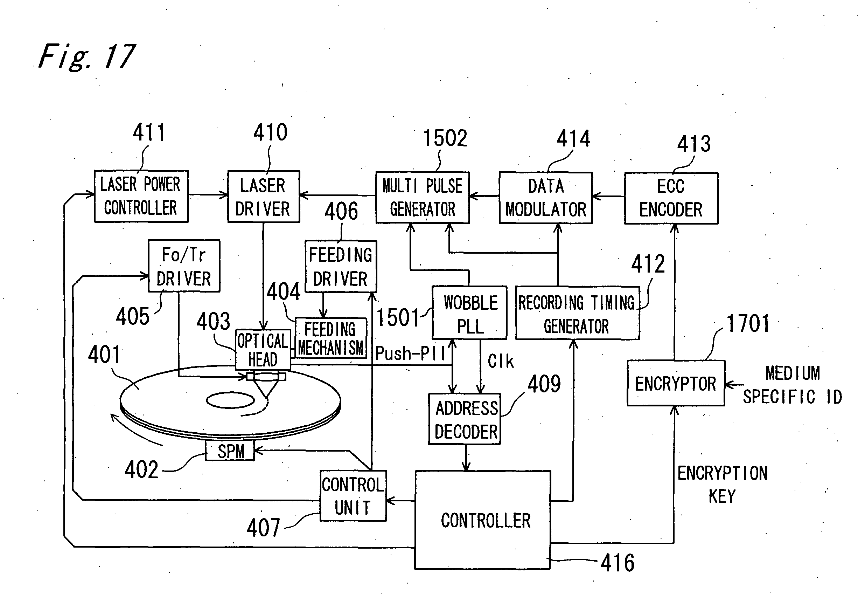

With reference to FIG. 17, a recording method of the medium specific ID information 105 and a recording apparatus according to the present embodiment will be described below. FIG. 17 is a block diagram of the recording apparatus of the medium specific ID information 105 in the third embodiment. In FIG. 17, the basic configuration is the same as those of the first and second embodiments, and the elements having the same functions are represented by the same reference numerals as FIG. 4 and FIG. 15. Since the elements represented by the same reference numerals are the same as the fist and second embodiments, the explanations thereof are herein omitted.

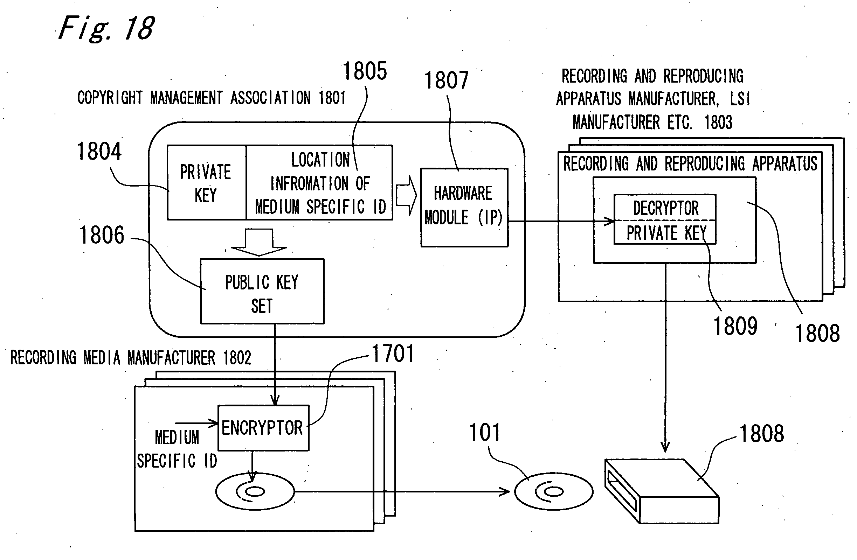

The third embodiment is characterized in that encryptor 1701 is provided as shown in FIG. 17. The encryptor 1701 encrypts a medium specific ID on the basis of a key that is given from the controller 416. Thus, encryption of the medium specific ID provides a very effective advantage to the above-described security hole. With respect to this point, the detailed explanation will be given below with reference to FIG. 18. Recording and reproduction of the rewritable data is the same as the first embodiment, and thus its explanation is herein omitted.

FIG. 18 illustrates a mechanism of encryption and demodulation of the medium specific ID. In FIG. 18, a copyright management association 1801 serves to manage a copyright of content. A recording media manufacturer 1802 serves to manufacture the recording medium 101 in which the medium specific ID is recorded. A manufacture 1803 of a recording and reproducing apparatus serves to manufacture an optical disk apparatus and an LSI for the optical disk apparatus. The copyright management association 1801 includes a private key 1804 for encrypting the medium specific ID, information 1805 representing a location where the medium specific ID is recorded, a public key 1806 that is generated from a set of the private key 1804 and the location information 1805 of the medium specific ID, and an encryptor/decoder 1807 made into a module which encrypts and decrypts the medium specific ID using a set of the private key and the location information of the medium specific ID. The manufacture 1803 of a recording and reproducing apparatus manufactures a recording and reproducing apparatus 1808 which includes a decryptor 1809.

The copyright management association 1801 creates a plurality of sets of public keys 1806 disclosed to the recording media manufacturer 1802 on the basis of a key made of a pair of the private key 1804 and the information 1805 representing an address position where the medium specific ID is recorded. One of the sets of public keys 1806 is distributed to the recording media manufacturer 1802. The recording media manufacturer 1802 encrypts the medium specific ID in accordance with an algorithm that has been decided in advance using the public key in the public key sets 1806, and records it in the optical disk 101.

On the other hand, the manufacture 1803 of a recording and reproducing apparatus or the LSI for the optical disk apparatus is provided with a circuit component for decrypting the medium specific ID that is encrypted with the key made of a pair of the private key 1804 and the location information 1805 of the medium specific ID, or the modular encryptor/decoder to be incorporated in the LSI. The circuit component or the modular encryptor/decoder includes the private key 1804, and can encrypt and decrypt the medium specific ID if acquiring the information 1805 representing a location where the medium specific ID is recorded,.

The information 1805 representing a location where the medium specific ID is recorded that is used here just have to be information capable of uniquely specifying a position where the medium specific ID is recorded. This information is needed to be recorded in the position where the medium specific ID is recorded at the same time. For example, it is also possible to embed information in a part of the address information of the optical disk 101. Alternatively, the address information may be used as it is.

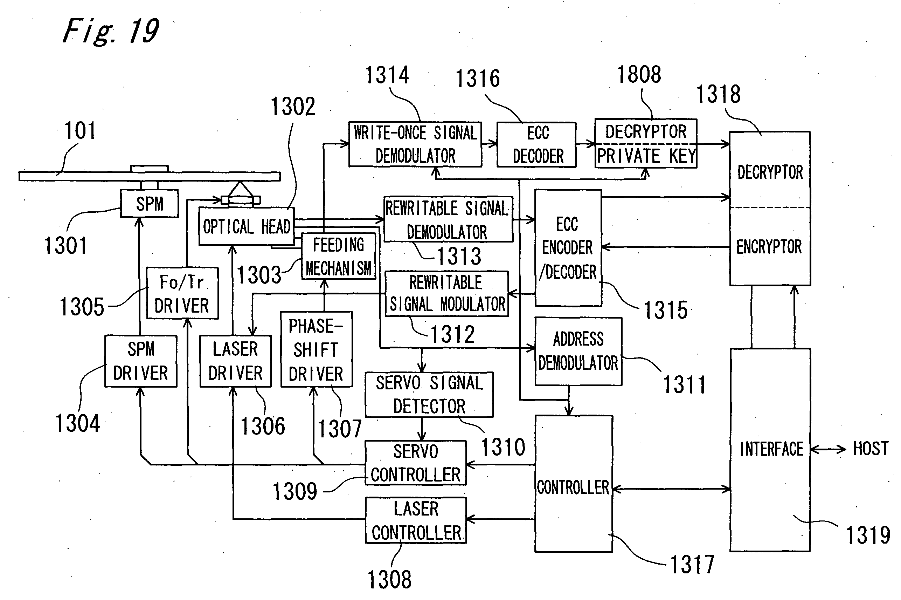

A method and apparatus for reading the medium specific ID information 105 that is recorded by such a mechanism will be described with reference to FIG. 19.

FIG. 19 is a block diagram of an optical disk apparatus for reproducing the medium specific ID information 105 according to the third embodiment. In FIG. 19, the basic structure is the same as that of the first embodiment and the same functional elements are represented by the same reference numerals as those in FIG. 13. Since the elements represented by the same reference numerals are the same as the first embodiment, the detailed explanation thereof is herein omitted.

When the optical disk 101 is set, at first, the controller 1317 controls the phase-shift driver 1307 through the servo controller 1309 to move a phase system to the vicinity of the address M in order to move the optical head 1302 to the address M-1 that is previous to the address M in which the medium specific ID is recorded. After that, carrying out the focus and tracking control, the address demodulator 1311 reads out the current address, and the servo control system 1307 carries out multi jump and one track jump control on the basis of a difference between the read address and the address M-1, thereby completing seeking of the address M-1. In the area 803 of the address M-1, as described above, its recording film is initialized to the erase level. On the basis of this level, the write-once signal demodulator 1314 demodulates the recording pit 902 that is recorded as the write-once information. The medium specific ID that is demodulated by the write-once signal demodulator 1314 is encrypted, and thus it is necessary to decode (decrypt) the medium specific ID.

According to the present embodiment, the location information 1805 of the medium specific ID used as a key of encryption by the copyright management association 1801 is defined to be the address M-1 of the sector just before the sector (address M) where the medium specific ID is recorded.

This encryption is decoded by a decryptor 1808. Upon reception of the address information that is read out by the address decoder 1311, the decryptor 1808 restores a set of the keys necessary to decrypt the encrypted medium specific ID by using a pair of the read address information and the private key 1804 held in the decryptor 1808, and decrypts the medium specific ID by using the set.

Then, using the decrypted medium specific ID, the decryptor 1318 decrypts contents encrypted by the medium specific ID.

In the conventional optical disk, in case that a pattern of the other medium is decrypted and copied in the address N that is different from the address M and that an address from which the medium specific ID is read is made to the address N by falsifying a small part of the program of the system controller, the conventional optical disk apparatus is operated using the false medium specific ID recorded in the address N as a correct medium specific ID. On the contrary, the optical disk apparatus according to the present embodiment encrypts the medium specific ID and requires the information 1805 representing a location (in the present embodiment, address M-1) where the medium specific ID is recorded for decryption of the medium specific ID. Therefore, when a very small part of the program of the system controller is falsified and the falsified optical disk as described above is inserted, if the optical disk apparatus tries to decrypt the medium specific ID that is copied and recorded in the address N from the other medium, N-1 is supplied in the decryptor 1808 as a recording location of the medium specific ID. Therefore, it is not possible to correctly decrypt the medium specific ID. It is also possible to falsify such a mechanism for supplying the address in principle, however, in practice, this is impossible because the part regarding the mechanism requires change of hardware in the inside of the LSI.

As described above, encryption of the medium specific ID using, as a part of key, the location information of the medium specific ID enhances a resistance characteristic against the falsification largely, and thus it is possible to construct the mechanism for strongly preventing the copyright.

### Fourth Embodiment

The falsification of the medium specific ID may not be prevented sufficiently even if the mechanism according to the third embodiment is used. For example, to the recording medium in which information is not recorded in an address (in the above-described embodiment, address M) which seems to be recorded with the medium specific ID, can record the medium specific ID easily in that address. The recording medium for recording information without requiring protection of the copyright does not require the medium specific ID and the recording medium having no medium specific ID recorded therein can omit the recording step in its manufacturing process to reduce the manufacturing cost. This becomes a great advantage for the user.

Therefore, both of the recording media having the medium specific ID recorded therein and the recording media having no medium specific ID recorded therein are desired. However, if the recording medium having no medium specific ID recorded therein is provided, the false medium specific ID can be recorded at a position where a medium specific ID should be recorded, thus resulting in a security hole. In recording medium having no medium specific ID recorded therein, the above-described falsification is impossible if the medium has no address where the medium specific ID is recorded. This becomes an effective method particularly against the method to encrypt the medium specific ID and record it together with the location information of the medium specific ID. However, the optical disk apparatus has to distinguish the disk in which the medium specific ID is recorded from the disk in which the medium specific ID is not recorded. If there is no address in which the medium specific ID should be recorded, the address where the medium specific ID should be recorded cannot be read out and such a determination becomes impossible. The present embodiment can solve this problem.

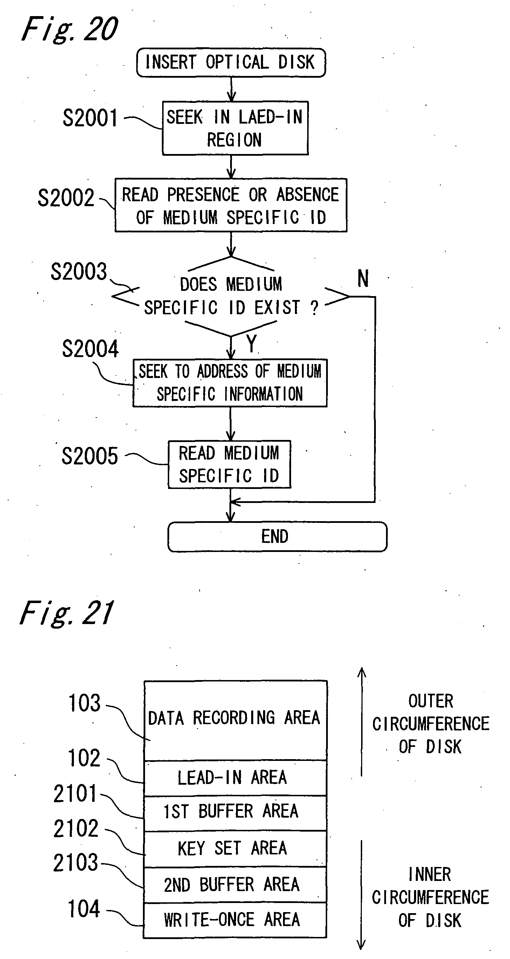

The optical disk according to the present embodiment holds information (referred to as "a medium specific ID flag") indicating whether the medium specific ID is recorded in the lead-in area 102 storing information necessary for system control such as information for controlling the optical disk and information for replacement or the like. When reproducing data from such an optical disk, the medium specific ID flag is referred to. If the flag indicates "true", it is determined that there is a predetermined address at which the medium specific ID is recorded. If the flag indicates "false", it is determined that there is no predetermined address at which the medium specific ID is recorded. This operation is shown in FIG. 20.

When the optical disk is inserted, at first, the access is made to the lead-in area 102 (step S2001). Then, the medium specific ID flag is read out (step S2002). With reference to the medium specific ID flag, it is determined if the medium specific ID is recorded in the inserted optical disk (step S2003). If the_value of the medium specific ID flag is "false", that is, if the medium specific ID is not recorded, the processing is terminated.

If the value of the medium specific ID flag is "true", that is, if the medium specific ID is recorded, the optical disk apparatus seeks the medium specific ID address (stepS2004), and reads out the medium specific ID at that position (step S2005).

Thus, by providing the medium specific ID flag indicating with or without of the medium specific ID in the lead-in area 102, even if the disk where the medium specific ID is not recorded and there is no address having the medium specific ID recorded therein is inserted, the drive not seeking the address at which the medium specific ID is recorded can be realized and the operation of the optical disk apparatus can be completed.

Thereby, it is possible to solve the problem of a security hole caused by providing the recording medium storing no medium specific ID, so that the security can be improved.

### Fifth Embodiment

As a mechanism for protecting the copyright, a method using the key set information in order to revoke devices is provided. This key set information is composed of an area in which a set of plurality of keys necessary to read information of which copyright is managed and which is encrypted. The optical disk apparatus can obtain a key for decrypting the encryption by reading plural places in the key set information. Thereby, the information of which the copyright managed and which is encrypted can be decrypted and reproduced. If the apparatus carrying out the false processing is distributed and the copyright is infringed, a key read by the apparatus carrying out the false processing is deleted in the key set information. Thereby, the false apparatus cannot acquire the key for reproduction and the reproduction of the data becomes impossible. Thus, use of the key set information for management of the copyright allows each apparatus carrying out the false processing to be made inoperable.

According to the conventional optical disk, the medium specific ID is recorded, in the area at the innermost periphery of the disk that is not used as data area. However, the optical disk according to the present invention performs tracking to record the medium specific ID in a specific address. Thus, it is necessary to read out the address.

In the case that the medium specific ID of the above-described configuration is recorded in the innermost periphery of the disk, it is necessary to provide a storage area to which the address is added, at the innermost periphery of the disk. On the other hand, key set information is required about several mega bytes, and is recorded with the pit and the groove wobbled at a high speed to prevent the falsification. Therefore, a shape of the groove is different from that of the recording and reproducing area or the write-once area. When the key set area is secured in such a conventional optical disk, the configuration shown in FIG. 21 is required.

As shown in FIG. 21, from the outer periphery toward the inner periphery of the disk, provided are a data recording area 103 for storing rewritable data, a lead-in area 102 for storing control information of the disk, a first buffer area 2101, a key set area 2102 for revoking, a second buffer area 2103, and a write-once area 105 for storing the medium specific ID. The first buffer area 2101 and the second buffer area 2103 are provided at a boundary of the key set area 2102 because the key set area 2102 is required to record several mega bytes of data which can be generated by stamping.

The track configuration of the key set area 2102 is different from the data recording area 103 for storing the data and the write-once area 104 for storing the medium specific ID, and has a track composed of pits and a groove which records data by wobbling at high speed In order to stably access although there is core deviation and an access error in the key set area 2102, the first buffer area 2101 and the second buffer area 2103 are always needed. These areas are needed at least several 100 µm, thus causing lowering of a recording capacity. This is a very serious problem in the small disk. The present embodiment solves this problem.

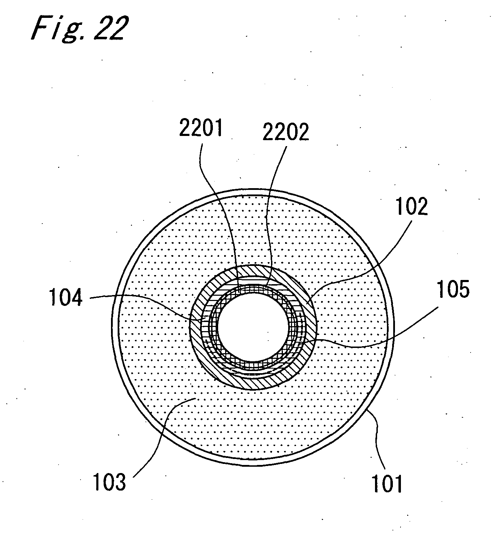

FIG. 22 shows an optical disk according to the present embodiment. In FIG. 22, the basic configuration of the present embodiment is the same as that of the first embodiment. The elements having the same functions are represented by the same reference numerals as the first embodiment, and the explanations thereof are herein omitted. In FIG. 22, the optical disk has a first buffer area 2201 and key set information 2202 used for revoking of the optical disk apparatus. In the present embodiment, a width of the first buffer area 2201 is 150 µm.

The optical disk according to the present embodiment is highly characteristic in that the key set area 2202 is allocated at the innermost periphery of the disk. This allocation can decrease buffer areas from two to one so as to increase the recording capacity, although, two buffer areas 2101 and 2103 are needed as shown in FIG. 21 in the prior art.

### Sixth Embodiment

According to the above-described embodiments, the medium specific ID is recorded as the write-once information, and the write-once information is recorded by the manufacture for manufacturing the recording media upon shipping. However, in recent years, by development of a network, in many cases, the contents are electronically distributed through the network to be recorded in the optical disk and in future, development of this field can be expected.

When using the rewritable disk in this filed, it is necessary to record on the optical disk information about accounting and the number of times of reproduction, information about data movement, or the like. However, if such the information is recorded in the rewritable optical disk as rewritable information, the falsification thereof becomes possible and the false optical disk may be distributed. In order to use the rewritable optical disk for application in online distribution required for higher security, a recording area in which falsification of the data is impossible is required. The present embodiment provides a mechanism to solve this problem.

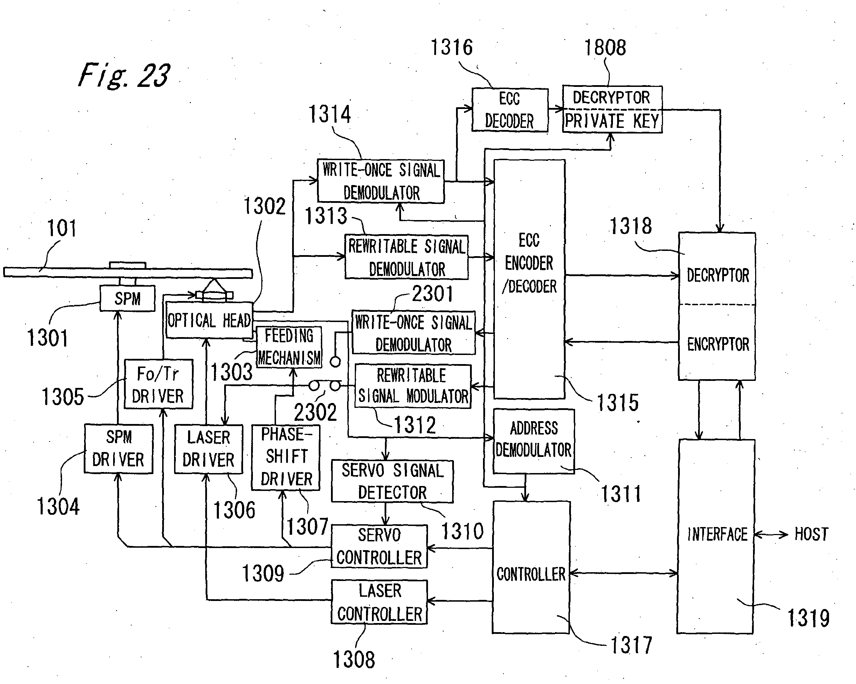

FIG. 23 is a block diagram of an optical disk apparatus for reproducing the medium specific ID information according to the present embodiment. According to the present embodiment, the optical disk apparatus records the medium specific ID information in the write-once recording area 105. In FIG. 23, the basic configuration is the same as that of the third embodiment, and the elements having the same functions are represented by the same reference numerals as FIG. 13 and FIG. 19 and the explanation thereof is herein omitted. According to the present embodiment, an optical head 1302 with a wavelength 405 nm, number of apertures (NA) about 0.85 is used. Since the recording and reproduction of the rewritable data is the same as the first embodiment, and thus the explanation thereof is herein omitted.

In FIG. 23, a write-once signal modulator 2301 converts the recording data of the ECC encoder 1315 into the multi-pulse data and modulate it to a sequence of the recording data. A switch 2302 may switch the write-once signal into the rewritable signal. The processing for reading the medium specific ID upon mounting of the disk is the same as that of the third embodiment.

The data recording processing to the write-once area will be described below.

A command to instruct recoding of the data in the write-once area is issued from a host via the interface 1319. Upon receipt of this command, the controller 1319 controls the phase-shift driver 1307 through the servo controller 1309 to move the feeding mechanism 1303 to the write-once area 104. In addition, the controller 1319 controls the SPM driver through the servo controller unit 1309 to make rotation number of the motor lower (for example, a linear speed 1 m/s) than that upon reproduction of the data recording area 103 (for example, a linear speed 5 m/s). The data to be recorded by write-once is transmitted from the host via the interface 1319. The transmitted data is encrypted by the encryptor 1318 on the basis of the media specific ID information of the recording medium, and is added with an error correction code by the ECC encoder 1315. The data with the error correction code added is converted by the write-once signal modulator 2301 into a laser module signal to be recorded. In this case, the switch 2302 is connected to the side of the write-once signal modulator. Then, the laser driver 1306 is driven and the data is recorded by the laser modulation signal.

The recording pattern of the write-once signal is the same as that of the first embodiment and the peak power during recording is 11 mW. During recording of the write-once data, in order to suppress the peak power, the rotational number of the motor 1301 is lowered and the data is recorded with a liner speed 1 m/s. In this case, if the rotational number of the motor is lowered, the motor is made unstable, and therefore the rotational number cannot be lowered largely. Therefore, according to the present embodiment, arranging the write-once area at the inner periphery side of the disk, the rotational number of the motor is prevented from being lowered largely. Recording of data in the above-described configuration and encrypting of data with the medium specific ID to record it in the write-once area allows very high reliability with respect to the recording data to be secured. This will be described in detail below.

As described in Background Art, in a rewritable recording media, encryption of the recording data with the medium specific ID can prevent the encrypted data from being decrypted to result in copyright protection, even if the data is copied in the other recording medium. However, about the falsification of the recording data, sufficient believability cannot be obtained sufficiently because the data can be easily rewritten into new data if the data is erased once and other data is recorded again. Therefore, even if the information about accounting and the number of times of reproduction, the information about movement of the data to other medium, or the like is encrypted by the medium specific ID to be recorded as the rewritable information, it is not possible to avoid a risk of falsification.

However, since the recording medium of the present invention (the third embodiment) can record the data as the write-once information of which data is encrypted with the medium specific ID and can not be erased or rewritten, all the recording data is left on the disk and the recording data cannot be changed. In addition, since the data is encrypted with the medium specific ID which is unique to the recording medium, even if a new disk is created by recording the data in a new blank disk and recording the data again, the medium specific ID of the new disk is different from the medium specific ID used for encryption. As a result, it is very easy to determine authenticity of the disk. Therefore, a system always having a very storing security against falsification of the data can be realized.

The information to be protected from falsification of the data is very limited, such as the information about accounting and the number of times of reproduction and the information about movement of the data, and it is preferable that a substance data such as AV data to be recorded can be erased or rewritten. For example, after the data is reproduced in the predetermined number of times of reproduction of the data, the data may be erased.

When using the recording medium and the data recording apparatus according to the invention, an area in which data cannot be rewritten area provided together with an area in which data can be rewritten. Thus, information to be protected from falsification can be protected with a sufficient security while the recorded data can be erased or moved free. Hence, an excellent system capable of satisfying requirement of distribution of the contents or the like can be provided.

In the above embodiments, information related to distribution of the contents is used as information to be recorded in a write-once manner. However, the information to be recorded in a write-once manner is not limited to that related to the distribution of the contents. For example, in a personal computer, the information to be recorded in a write-once manner can be applied to information indicating if software is installed. In addition, this information can be also used as an area for recording the information of the key set as described in the fifth embodiment. Further, the information of the key set may be changed via the network, thereby enabling change of the key set of the medium that has been already distributed, which is conventionally difficult. Hence, a system having a very excellent revoking capacity can be constructed.

### Industrial Applicability

The present invention can prevent rewriting and falsification of information recorded in an optical recording medium more surely. The present invention can be applied to an optical recording media such as a DVD or the like, from which protection of the copyright is highly required, and an optical disk apparatus for recording and reproducing the data in and from the optical recording medium.

The present invention has been described with respect to specific embodiments, however, many other modified examples; corrections, and other usages are obvious to a person skilled in the art. Therefore, the present invention is not limited to a specific disclosure here and is only limited to the appended claims. It is noted that the present application is related to Japanese Patent application No. 2002-277257 (filed on September 24, 2002), of which content is incorporated herein by reference.

## Claims

1. An optical recording medium having a data recording area in which data can be rewritten and a write-once area in which data can be written only once and not be erased, wherein
in the data recording area, a reflectance ratio of a part where the data is recorded is different from a reflectance ratio in a part where the data is not recorded, and
a reflectance ratio of a recording pit formed in the write-once area is higher than the higher one of the reflectance ratio in the part where the data is recorded and the reflectance ratio in the part where the data is not recorded in the data recording area.

2. The optical recording medium according to claim 1, wherein a medium specific ID which is specific to an optical recording medium is recorded in the write-once area.

3. The optical recording medium according to claim 1, comprising a recording layer, and a reflection layer which is arranged farther from a plane of incidence of a light than the recording layer, wherein the data is recorded in the write-once area by reduction of a thickness of a recording film due to deformation of the recording film.

4. The optical recording medium according to claim 1, wherein a recording pit of the write-once area is recorded with heat amount in a range from twice to four times heat amount necessary for rewriting the recording pit of the data recording area.

5. The optical recording medium according to claim 1, wherein a recording pit of the write-once area is formed by irradiating a laser beam modulated in a multi-pulse modulation.

6. The optical recording medium according to claim 1, wherein the write-once area and the data recording area have the same sector structures, and a start position of recording the data in the write-once area coincides with a start position of the sector.

7. The optical recording medium according to claim 1, wherein a recording layer of a sector just before a sector to be recorded with the data in the write-once area is initialized to a crystallization state.

8. The optical recording medium according to claim 1, wherein an address of the write-once area is recorded by a wobble modulation of a groove, and a recording pit in the write-once area is recorded in synchronization with a position where the wobble amount of the groove is maximum.

9. The optical recording medium according to claim 1, wherein an address of the write-once area is recorded by a wobble modulation of a groove, and a recording pit in the write-once area is recorded in synchronization with a position where the wobble amount of the groove is minimum.

10. The optical recording medium according to claim 2, wherein the medium specific ID is encrypted with a public key which is generated from information related to the position where the medium specific ID is recorded and a private key.

11. The optical recording medium according to claim 2, having a lead-in area for storing predetermined control information, the lead-in area storing determination information indicating if the optical recording medium has the medium specific ID.

12. The optical recording medium according to claim 1, wherein an area for storing information of a key set used for revoking, the write-once area, a lead-in area for storing predetermined control information, and the data recording area are formed in this order from an inner periphery of the optical recording medium.

13. An apparatus for recording data on an optical recording medium having a data recording area in which data can be rewritten and a write-once area in which data can be written only once and not be erased, comprising:
an optical head operable to irradiate a laser beam to the optical recording medium to record the data;
a laser driver operable to control an operation of recording the data by the optical head; and
a controller operable to control an operation of the laser driver;
wherein the controller performs the control so that the laser beam having heat amount in a range from twice to four times heat amount necessary for recording the rewritable data in the data recording area is irradiated to the write-once area to record the data.

14. A recording apparatus according to claim 13, wherein the controller performs the control so that a medium specific ID that is specific to the optical recording medium is recorded in the write-once area.

15. The recording apparatus according to claim 13, further comprising a multi pulse generator operable to output a laser beam including a plurality of pulses for generation of a recording pit.

16. The recording apparatus according to claim 13, wherein the write-once area and the data recording area have the same sector structures, and the recording apparatus further comprises a recording timing generator operable, to generate a recording timing so that a start position of recording the data in the write-once area coincides with a start position of the sector.

17. The recording apparatus according to claim 13, further comprising: a mechanism operable to move the optical head to a sector just before a sector in which data to be reproduced is recorded in the write-once area during the reproduction operation of the data in the write-once area; and a write-once signal demodulator operable to hold a reproduction level of the just before sector and reproduce the data on the basis of a level that is a predetermined number of times the held reproduction level.

18. The recording apparatus according to claim 13, further comprising a PLL operable to extract a clock from a wobble of a groove in the write-once area, and a pulse generator operable to generate a signal in synchronization with the wobble from the output of the PLL and record the generated signal in synchronization with a position where the amount of the wobble is maximum.

19. The recording apparatus according to claim 13, further comprising a PLL operable to extract a clock from a wobble of a groove in the write-once area, and a pulse generator operable to generate a signal in synchronization with the wobble from the output of the PLL and record the generated signal in synchronization with a position where the amount of the wobble is minimum.

20. The recording apparatus according to claim 14, further comprising an encryptor operable to encrypt the medium specific ID with a public key which is generated from information related to the position where the medium specific ID is recorded and a private key, the medium specific ID being recorded after being encrypted.

21. The recording apparatus according to claim 13, further comprising an encryptor operable to encrypt data to be recorded with the medium specific ID, the data to be recorded being recorded in the write-once area after being encrypted.

22. The recording apparatus according to claim 17, further comprising a section operable to reproduce the data in the write-once area, and a decryptor operable to decrypt the reproduced data with the medium specific ID.

23. The recording apparatus according to claim 13, wherein the controller makes rotational speed of the optical disk for reproduction of the write-once area lower than rotational speed for reproduction of the data recording area.
